(19) Europäisches Patentamt
European Patent Office
Office européen des brevets

(11) Veröffentlichungsnummer: **0 001 577**
**A1**

(12) # EUROPÄISCHE PATENTANMELDUNG

(21) Anmeldenummer: **78101035.0**

(22) Anmeldetag: **30.09.78**

(51) Int. Cl.[2]: **C 08 G 63/62**
C 08 J 7/10, C 08 L 69/00

(30) Priorität: **13.10.77 DE 2746141**

(43) Veröffentlichungstag der Anmeldung:
**02.05.79 Patentblatt 79/9**

(84) Benannte Vertragsstaaten:
**DE FR GB NL**

(71) Anmelder: **Bayer Aktiengesellschaft**
**Zentralbereich Patente,Marken und Lizenzen Bayerwerk**
**D-5090 Leverkusen 1(DE)**

(72) Erfinder: **Adelmann, Siegfried, Dr.**
**Bodelschwinghstrasse 18**
**D-4150 Krefeld(DE)**

(72) Erfinder: **Margotte, Dieter, Dr.**
**Wedelstrasse 48**
**D-4150 Krefeld(DE)**

(72) Erfinder: **Rosenkranz, Hans Jürgen, Dr.**
**Heinrich-Kauert-Weg 9**
**D-4150 Krefeld(DE)**

(72) Erfinder: **Vernaleken, Hugo, Dr.**
**Kreuzbergstrasse 18**
**D-4150 Krefeld(DE)**

(72) Erfinder: **Nouvertné, Werner, Dr.**
**Scheibler-Strasse 95**
**D-4150 Krefeld(DE)**

(72) Erfinder: **Freitag, Dieter, Dr.**
**Hasenheide 10**
**D-4150 Krefeld(DE)**

(54) **Aromatische Ketogruppen enthaltende thermoplastische Polycarbonate, Verfahren zu ihrer Herstellung und ihre Verwendung zur Herstellung von modifizierten Polycarbonaten.**

(57) Gegenstand der vorliegenden Erfindung sind thermoplastische aromatische Polycarbonate auf Basis von Diphenolen, die dadurch gekennzeichnet sind, daß sie zwischen 0,5 bis 5 Mol-%, vorzugsweise zwischen 1 und 3 Mol-%, bezogen auf die Gesamtmolmenge an einkondensierten, aromatischen Hydroxyverbindungen, aromatische Hydroxyketone einkondensiert enthalten. Ein weiterer Gegenstand der Erfindung ist ein Verfahren zur Herstellung dieser Polycarbonate sowie zur Modifizierung dieser Polycarbonate.

EP 0 001 577 A1

BAYER AKTIENGESELLSCHAFT
Zentralbereich
Patente, Marken und Lizenzen

5090 Leverkusen, Bayerwerk
PS-kl

Aromatische Ketogruppen enthaltende thermoplastische Polycarbonate und ihre Verwendung zur Herstellung von modifizierten Polycarbonaten

Die thermoplastischen aromatischen Polycarbonate sind für viele Anwendungsgebiete ausgezeichnete Kunststoffe. Ein gewisser Nachteil für spezielle Anwendungen besteht allerdings immer noch in ihrer Empfindlichkeit gegen organische Lösungsmittel und heißes Wasser sowie in ihrer Spannungsrißempfindlichkeit. Dies gilt auch für die im Prinzip bekannten Polycarbonattypen aus Bis-hydroxyphenyl-ketonen.

Es wurde nun überraschend gefunden, daß man Polycarbonate mit einem gewissen Gehalt an einkondensierten Hydroxyphenylketonen mittels UV-Bestrahlung so modifizieren kann, daß sie eine hervorragende Beständigkeit gegen organische Lösungsmittel und heißes Wasser und eine deutlich verbesserte Spannungsrißbeständigkeit erhalten.

Gegenstand der vorliegenden Erfindung sind thermoplastische aromatische Polycarbonate auf Basis von Diphenolen, die dadurch gekennzeichnet sind, daß sie zwischen 0,5 bis 5 Mol-%, vorzugsweise zwischen 1 und 3 Mol-%, bezogen auf die Gesamtmolmenge an einkondensierten, aromatischen Hydroxyverbindungen, aromatische Hydroxyketone einkondensiert enthalten.

Ein weiterer Gegenstand der Erfindung ist ein Verfahren zur Herstellung dieser Polycarbonate, das dadurch gekennzeichnet ist, daß man unter den für die Polycarbonatherstellung üblichen Bedingungen in heterogener oder in homogener Phase 0,5 bis 5 Mol-%, vorzugsweise 1 bis 3 Mol-%, bezogen auf die Gesamtmolmenge an umzusetzenden aromatischen Hydroxyverbindungen, an aromatischen Hydroxyketonen cokondensiert.

Ein weiterer Gegenstand der Erfindung ist ein Verfahren zur Modifizierung der erfindungsgemäßen ketogruppenhaltigen Polycarbonate, das dadurch gekennzeichnet ist, daß man diese gegebenenfalls nach Zusatz von 0,05 bis 5 Gew.-%, vorzugsweise von 0,1 bis 2 Gew.-%, bezogen auf Gewicht an modifizierbarem Polycarbonat, an Flammschutzmitteln, mit UV-Licht bestrahlt.

Ein weiterer Gegenstand der Erfindung sind außerdem modifizierte Polycarbonate, erhältlich nach dem vorstehend genannten Verfahren.

Erfindungsgemäß geeignete aromatische Hydroxyketone sind einerseits aromatische Monohydroxyketone, vorzugsweise solche der folgenden Formel I (Ia, Ib)

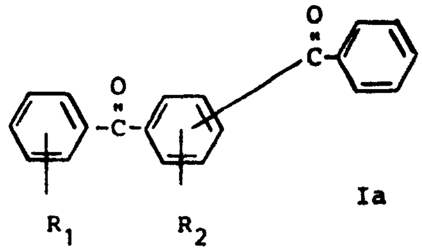

Ia

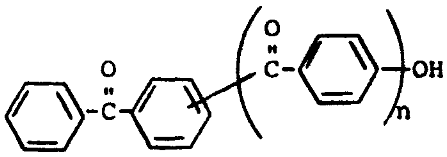

Ib

worin $R_1$ oder $R_2$ OH sind, n null oder 1 bedeutet und $R_1$ und $R_2$ entweder OH oder H sein können.

Erfindungsgemäß geeignete aromatische Hydroxyketone sind außerdem aromatische Dihydroxyketone, vorzugsweise solche der folgenden Formel II (IIa, IIb, IIc):

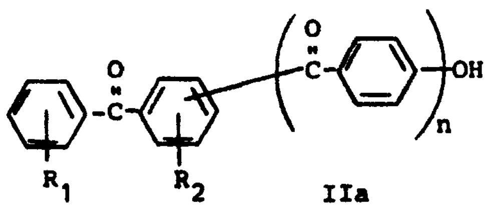

IIa

In IIa sind $R_1$ oder $R_2$ OH, n null oder 1 und können $R_1$ und $R_2$ entweder OH oder H sein.

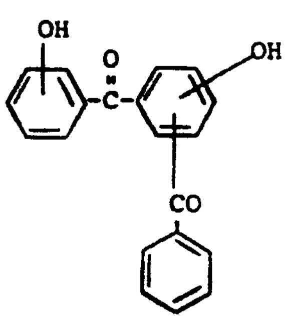

IIb

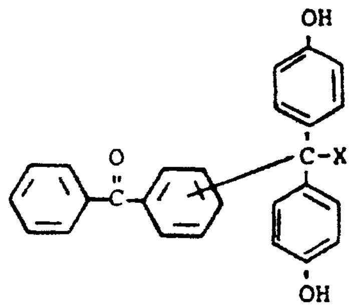

IIc

In IIc kann X ein $C_1$-$C_6$-Alkyl oder Phenyl sein.

Erfindungsgemäß geeignete aromatische Hydroxyketone sind außerdem aromatische Trihydroxyketone oder aromatische Tetrahydroxyketone, vorzugsweise solche der folgenden Formel III (IIIa, IIIb):

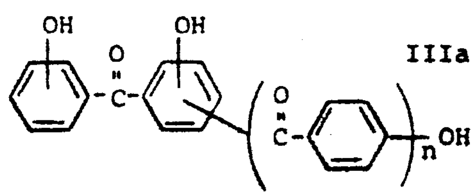

IIIa

In IIIa ist n null oder 1.

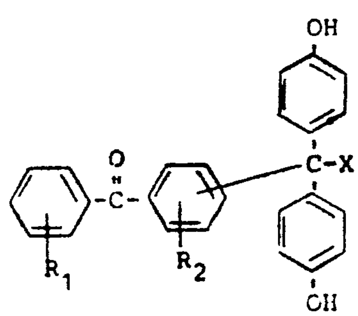

IIIb

In IIIb sind $R_1$ oder $R_2$ oder $R_1$ und $R_2$ OH, wobei $R_1$ und $R_2$ entweder OH oder H sein können, X kann ein $C_1$-$C_6$-Alkyl oder Phenyl sein.

Unter aromatischen Mono-, Di-, Tri- und -Tetrahydroxyketonen sind solche Verbindungen zu verstehen, die einerseits aromatisch gebundenes Carbonyl sowie die entsprechende Anzahl an aromatisch gebundenen Hydroxygruppen enthalten. Sie werden im Falle der Monohydroxyketone als Kettenabbrecher bei der Herstellung der erfindungsgemäßen, modifizierbaren Polycarbonate in den üblichen Mengen zwischen 0,5 und 5 Mol-%, bezogen auf die Gesamtmolmenge an umzusetzenden aromatischen Hydroxyverbindungen, gegebenenfalls unter Mitverwendung von anderen phenolischen Kettenabbrechern eingesetzt. Im Falle der Dihydroxyketone dienen sie als comonomere Diphenole in den Mengen zwischen 0,5 und 5 Mol-%, bezogen auf die Gesamtmolmenge an umzusetzenden aromatischen Hydroxyverbindungen, zusammen mit den beliebigen anderen für die Herstellung der modifizierbaren Polycarbonate einzusetzenden Diphenolen.

Im Falle der Trihydroxyketone und Tetrahydroxyketone dienen sie als Verzweiger bei der Herstellung der erfindungsgemäßen modifizierbaren Polycarbonate in den üblichen Mengen zwischen 0,5 und 2 Mol-%, bezogen auf die Gesamtmolmenge an umzusetzenden aromatischen Hydroxyverbindungen, gegebenenfalls unter Mitverwendung von anderen üblichen Verzweigern.

Für die Herstellung der erfindungsgemäßen modifizierten Polycarbonate sind alle Diphenole geeignet, beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-äther, Bis-(hydroxyphenyl)-sulfoxide, Bis-(hydroxyphenyl)-sulfone, $\alpha,\alpha'$-Bis-(hydroxyphenyl)-diisopropylbenzole, sowie deren kernalkylierte und kernhalogenierte Verbindungen.

Diese und weitere geeignete Diphenole sind z.B. in den US-Patentschriften 3 028 365, 2 999 835, 3 148 172, 3 271 368, 2 991 273, 3 271 367, 3 280 078, 3 014 891 und 2 999 846, in den Deutschen Offenlegungsschriften 1 570 703, 2 063 050, 2 063 052, 2 211 956, 2 211 957, der Französischen Patentschrift 1 561 518 und in der Monographie "H. Schnell, Chemistry and Physics of Polycarbonates, Interscience Publishers, New York, 1964, beschrieben.

Bevorzugte Diphenole sind z.B.:2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Erfindungsgemäß einsetzbare aromatische Hydroxyketone sind beispielsweise 4-Hydroxybenzophenon, 4,4'-Dihydroxybenzophenon, 2,4-Dihydroxybenzophenon, 4-(α,α-Bis-(4-hydroxyphenyl)-äthyl-benzophenon, 4-Hydroxybenzoyl-benzophenon und andere.

Besonders geeignete aromatische Hydroxyketone sind 4,4'-Dihydroxybenzophenon und 4-(α,α-Bis-(4-hydroxyphenyl)-äthyl-benzophenon.

Neben oder anstelle der erfindungsgemäß einsetzbaren aromatischen Trihydroxyketone oder aromatischen Tetrahydroxyketone können zur Herstellung der erfindungsgemäßen modifizierten Polycarbonate die bekannten Verzweiger mit drei oder mehr als dreifunktionellen Verbindungen, insbesondere solche mit drei oder mehr als drei phenolischen Hydroxylgruppen eingesetzt werden, wobei die üblicherweise bekannten Mengen an Verzweiger zwischen 0,05 und 2 Mol-%, bezogen auf eingebaute Diphenole, einzuhalten sind. Die Herstellung verzweigter Polycarbonate ist beispielsweise in den DT-OS 1 570 533 und DT-OS 1 595 762 sowie in dem US-PS 3 544 514 beschrieben.

Als Kettenabbrecher sind neben den erfindungsgemäß einsetzbaren Monohydroxyketone die üblicherweise gebräuchlichen Phenole wie beispielsweise p-tert.-Butylphenol, p-Chlorphenol, 2,4,6-Tribromphenol und Phenol selbst in den üblichen Mengen einsetzbar, die sich nach dem einzustellenden Molekulargewicht der erfindungsgemäßen modifizierbaren Polycarbonate bestimmt.

Die erfindungsgemäß modifizierbaren Polycarbonate sollen Gewichtsmittelmolekulargewichte Mw zwischen 10.000 und 200.000 vorzugsweise zwischen 20.000 und 80.000 haben (gemessen gemäß Gelchromatographie nach vorheriger Eichung).

Die Herstellung der erfindungsgemäß modifizierbaren Polycarbonate kann im wesentlichen nach folgenden zwei bekannten Verfahren (vgl. H. Schnell, Chemistry and Physics of Polycarbonates, Polymer Rev., Vol. IX, Seite 27 ff., Interscience Publishers) erfolgen, die im folgenden kurz beschrieben werden.

1. Herstellung eines aromatischen Polycarbonats in heterogener Phase (Phasengrenzflächenverfahren)

Hierbei werden die Diphenole zusammen mit den aromatischen Hydroxyketonen und den monophenolichen Kettenabbrechern in wäßriger alkalischer Phase gelöst. Nach Zugabe eines für Polycarbonat geeigneten Lösungsmittels entsteht ein zweiphasiges Gemisch, in das bei 0 bis 60°C Phosgen eingeleitet wird. Nach Zugabe eines Katalysators werden hochmolekulare Polycarbonate erhalten. Die Aufarbeitung erfolgt durch Waschen der abgetrennten organischen Phase bis zur Neutralität und anschließender Abdestillation des Lösungsmittels z.B. in Zweiwellenausdampfextrudern bei Temperaturen von 280 bis 330°C.

Geeignete organische Lösungsmittel für Polycarbonat sind die für die Polycarbonatsynthese bekannten wie beispielsweise Methylenchlorid, Chlorbenzol sowie Mischungen daraus.

Geeignete Katalysatoren sind die für die Polycarbonatsynthese bekannten wie beispielsweise Triäthylamin und Tributylamin.

2. Herstellung eines Polycarbonats in homogener Phase (Pyridinverfahren)

Die Diphenole werden zusammen mit den aromatischen Hydroxyketonen und den monophenolischen Kettenreglern in einer organischen Base wie beispielsweise Pyridin gelöst. Nach Zugabe von einem für Polycarbonat geeigneten Lösungsmittel wird Phosgen bei einer Temperatur zwischen 0 und 60°C eingeleitet.

Das sich während der Reaktion bildende Pyridinhydrochlorid wird abfiltriert und die organische Phase mit verdünnter HCl und anschließend mit Wasser neutral gewaschen. Die Aufarbeitung erfolgt ebenfalls wie unter 1) beschrieben, beispielsweise durch Abdampfen des Lösungsmittels in einem Zweiwellenausdampfextruder.

Neben dem Pyridin geeignete organische Basen sind beispielsweise Triäthylamin und Tributylamin. Als Lösungsmittel für Polycarbonat können Methylenchlorid und Chlorbenzol sowie Mischungen daraus verwendet werden.

Die für die Modifizierung der erfindungsgemäßen Polycarbonate erforderliche UV-Bestrahlung erfolgt unter Verwendung von handelsüblichen UV-Strahlern, bei-

BAD ORIGINAL

spielsweise Philips HTQ 4 oder 7, Hanovia-Strahlern und anderen. Quellen anderer engergiereicher Strahlen, z.B. Elektronenstrahlen sind ebenfalls verwendbar. Die Bestrahlungsdauer liegt je nach Gehalt an aromatischen Ketogruppen und je nach Probenbeschaffenheit bei 20 bis 180 Sekunden.

Die für die Modifizierung der erfindungsgemäßen Polycarbonate geeigneten Flammschutzmittel sind beispielsweise die für die Flammfestmachung von Polycarbonaten bekannten und geeigneten Verbindungen und synergistisch wirkenden Substanzen wie sie in den DT-OS 1 930 257 (Le A 12 278), DT-OS 2 049 358 (Le A 13 263), DT-OS 2 112 987 (Le A 13 619), DT-OS 2 253 072 (Le A 14 723) und anderen Literaturstellen beschrieben sind.

Geeignet sind z.B. Alkalisalze, insbesondere die in Polycarbonat löslichen, wie z.B. Kaliumisooctanat, Natriumisooctanat, Lithiumisooctanat, Kaliumperfluoroctanat, Natriumperfluoroctanat, Lithiumperfluoroctanat, Kaliumsalze der 5-Äthyl-dioxan-1,3-yl-(5)-carbonsäure, Rubidiumisooctanat, Rubidiumperfluoroctanat, und die Alkalisalze der Perfluoralkansulfonsäure, wie Kaliumperfluormethansulfonat, Kaliumperfluoroctansulfonat und Kaliumperfluorbutansulfonat.

Des weiteren können Alkalisalze der Laurinsäure, Stearinsäure, Ölsäure, des Phthalsäuremonobenzylesters, des Adipinsäuremonobutylesters, der p-Octylbenzoesäure, p-tert.-Butylbenzoesäure, der 3-(3,5-di-tert.-Butyl-4-hydroxyphenyl)-propionsäure und des Diglykolsäuremonodecylesters verwendet werden.

Die Modifizierung der erfindungsgemäßen Polycarbonate erfolgt gegebenenfalls in zwei Stufen. Die erste Stufe ist die Einarbeitung des Flammschutzmittels über

a) Lösung und Isolierung als Film, oder über

b) eine Compoundierung bei 280-330°C zu Granulat, und die zweite

Stufe ist die UV-Bestrahlung bis zur Vernetzung, gegebenenfalls nach vorheriger Formgebung zu Platten oder anderen Spritzgußteilen.

Die erfindungsgemäß erhältlichen modifizierten Polycarbonat-Formmassen sind gegenüber organischen Lösungsmitteln beständig und zeichnen sich gegenüber herkömmlichen Polycarbonaten durch eine verbesserte Spannungsrißbeständigkeit aus. Sofern ihnen zudem Flammschutzmittel zugesetzt wurden, erhält man schon bei geringen Zusätzen Produkte, die nach UL Subj. 94 mit VO beurteilt werden.

Die erfindungsgemäß erhältlichen modifizierten Polycarbonate können als Folien und Formkörper überall dort eingesetzt werden, wo hohe Beständigkeit gegen organische Lösungsmittel bei hoher Spannungsrißbeständigkeit gefordert wird.

Die folgenden Beispiele sollen den Erfindungsgegenstand näher erläutern. Die angegebenen relativen Viskositäten wurden in Methylenchlorid bei 25°C und einer Konzentration von 5 g/l gemessen.

Beispiel 1 (Vergleichsbeispiel)

Ca. 454 Teile 4,4'-Dihydroxydiphenyl-2,2-propan und 9,5 Teile p-tert.-Butylphenol werden in 1,5 l Wasser suspendiert. In einem 3-Halskolben, ausgestattet mit Rührer und Gaseinleitungsrohr, wird der Sauerstoff aus der Reaktionsmischung entfernt, indem unter Rühren 15 min. lang Stickstoff durch die Reaktionsmischung geleitet wird. Dann werden 355 Teile 45 %iger Natronlauge und 1000 Teile Methylenchlorid zugegeben. Die Mischung wird auf 25°C abgekühlt. Unter Aufrechterhaltung dieser Temperatur durch Kühlen werden 237 Teile Phosgen während einer Zeitdauer von 120 min. zugegeben.

Eine zusätzliche Menge von 75 Teilen einer 45 %igen Natronlauge wird nach 15 - 30 min. zugegeben, bzw. nachdem die Phosgenaufnahme begonnen hat. Zu der entstandenen Lösung werden 1,6 Teile Triäthylamin zugegeben und die Mischung weitere 15 min. gerührt. Eine hochviskose Lösung wird erhalten, deren Viskosität durch Zugabe von Methylenchlorid reguliert wird. Die wäßrige Phase wird abgetrennt. Die organische Phase wird mit Wasser salz- und alkalifrei gewaschen. Das Polycarbonat wird aus der gewaschenen Lösung isoliert und getrocknet. Das Polycarbonat hat eine relative Viskosität von 1,29 - 1,30.

Beispiel 2

2778 g (12,2 Mol) 4,4'-Dihydroxydiphenyl-2,2-propan und 39,6 g (0,2 Mol) 4,4'-Dihydroxybenzophenon und 48 g (0,32 Mol) p-tert.-Butylphenol werden in 19 l Wasser suspendiert. In einem Kessel, ausgestattet mit Rührer und Gaseinleitungsrohr, wird der Sauerstoff aus der Reaktionsmischung entfernt, indem unter Rühren 15 min. lang Stickstoff durch die Reaktionsmischung geleitet wird. Dann werden 2347 g (26,4 Mol) 45 %ige Natronlauge

und 27,4 l Methylenchlorid zugegeben. Die Mischung wird auf $25^{o}C$ abgekühlt. Unter Aufrechterhaltung dieser Temperatur durch Kühlen werden 1544 g (15,6 Mol) Phosgen während der Zeitdauer von 120 min. zugegeben. Eine zusätzliche Menge von 1260g (14,2 Mol) 45 %ige Natronlauge und 7,5 l Wasser wird nach 15 Min. zugegeben, bzw. nachdem die Phosgenaufnahme begonnen hat. Zu der entstandenen Lösung werden 9 ml konzentriertes Triäthylamin zugegeben und die Mischung weitere 15 min. gerührt.

Es wird eine hochviskose Lösung erhalten, deren Viskosität durch Zugabe von Methylenchlorid reguliert wird. Die wäßrige Phase wird abgetrennt.

Die organische Phase wird mit Wasser salz- und alkalifrei gewaschen. Das Polycarbonat wird aus der gewaschenen Lösung isoliert und getrocknet. Das Polycarbonat hat eine relative Viskosität von 1,325.

Beispiel 3

Nach dem in Beispiel 2 angegebenen Verfahren wird ein Polycarbonat aus 2,212 kg (9,7 Mol) 4,4'-Dihydroxyphenyl-2,2-propan, 97 g (0,3 Mol) 4-($\alpha$,$\alpha$-Bis-(4-hydroxyphenyl))-äthylbenzophenon und 4,5 g (0,03 Mol) p-tert.-Butylphenol mit einer relativen Viskosität von 1,29 hergestellt.

Die Polycarbonate aus den Beispielen 1 bis 3 werden in Methylenchlorid gelöst und zu 100 µ starken Filmen verarbeitet und bei $120^{o}C$ über Nacht getrocknet. Anschließend werden die Filme

BAD ORIGINAL

45 und 180 Sekunden beidseitig im Abstand von 15 cm mit einem UV-Strahler Philips HTQ 4 (Quecksilberdampfhochdruckbrenner) bestrahlt. Die Filme werden mit Methylenchlorid behandelt und die vernetzten Anteile als unlösliche Fibrillen bzw. Filmstücke abfiltriert und nach Trocknung gravimetrisch bestimmt. Als Folge der unterschiedlichen Vernetzung der Polycarbonate der Beispiele 1 bis 3 unterliegen die Filme unterschiedlicher Spannungsrißkorrosion.

Zur Messung werden 1 cm breite, 100 µ dicke Filmstreifen zu einer Schlaufe mit einem Radius von 3 cm gebogen und in Tetrachlorkohlenstoff getaucht. Die Zeit bis zum Zerspringen der Filmschlaufen infolge auftretender Spannungsriße wird gestoppt. Die Ergebnisse sind in der Tabelle I zusammengefaßt.

**Tabelle I**

| | Belichtungszeit sec | unlöslicher Anteil % | Beständigkeit in Tetrachlorkohlenstoff sec |
|---|---|---|---|
| Beispiel 1 (Vergleichsbeispiel) | 180 | - | < 1 |
| Beispiel 2 | 45 | 40 | 120 |
| | 180 | 70 | 180*) |
| Beispiel 3 | 45 | 30 | 70 |
| | 180 | 55 | 180*) |

*) nach 180 sec wurde der Test abgebrochen

Beispiel 4 (Vergleichsbeispiel)

4996 g des Polycarbonats aus Beispiel 1 werden zusammen mit 4 g (0,1 Gew. %) Kaliumperfluorbutansulfonat in einer Doppelwellenschnecke bei 300°C vermischt und granuliert.

Beispiel 5

4996 g des Polycarbonats aus Beispiel 2 werden zusammen mit 4 g (0,1 Gew. %) Kaliumperfluorbutansulfonat in einer Doppelwellenschnecke bei 300°C vermischt und granuliert.

Beispiel 6

4996 g des Polycarbonats aus Beispiel 3 werden zusammen mit 4 g (0,1 Gew. %) Kaliumperfluorbutansulfonat in einer Doppelwellenschnecke bei 300°C vermischt und granuliert.

Die modifizierten Polycarbonate aus den Beispielen 4, 5 und 6 werden zu Normprüfstäben verspritzt und 45 sec mit einem Philips HTQ 4 Quecksilberdampfhochdruckbrenner im Abstand von 15 cm beidseitig belichtet. Die gefundenen Brandeinstufungen sind in der Tabelle 2 zusammengefaßt.

Tabelle 2

| Brandverhalten nach | UL Subj. 94 1/8" | UL Subj. 94 1/16" |
|---|---|---|
| Beispiel 4 (Vergleichsbeispiel) | V2 | V2 |
| Beispiel 5 | VO | VO |
| Beispiel 6 | VO | VO |

Patentansprüche

1. Thermoplastische aromatische Polycarbonate auf Basis von Diphenolen, dadurch gekennzeichnet, daß sie zwischen 0,5 und 5 Mol-%, bezogen auf die Gesamtmolmenge an einkondensierten aromatischen Hydroxyverbindungen, aromatische Hydroxyketone einkondensiert enthalten.

2. Polycarbonate gemäß Patentanspruch 1, dadurch gekennzeichnet, daß sie zwischen 1 und 3 Mol-% aromatische Hydroxyketone einkondensiert enthalten.

3. Verfahren zur Herstellung der Polycarbonate gemäß Patentansprüche 1 und 2, dadurch gekennzeichnet, daß man unter den für die Polycarbonatherstellung üblichen Bedingungen in heterogener oder in homogener Phase 0,5 bis 5 Mol-%, vorzugsweise 1 bis 3 Mol-%, bezogen auf die Gesamtmolmenge an umzusetzenden aromatischen Hydroxyverbindungen, an aromatischen Hydroxyketonen cokondensiert.

4. Verfahren zur Modifizierung der Polycarbonate gemäß Patentansprüche 1 und 2, dadurch gekennzeichnet, daß man diese, gegebenenfalls nach Zusatz von 0,05 bis 5 Gew.-%, bezogen auf Gewicht an modifizierbarem Polycarbonat, an Flammschutzmitteln, mit UV-Licht bestrahlt.

5. Modifizierte Polycarbonate erhältlich nach dem Verfahren des Anspruchs 4.

Europäisches Patentamt

# EUROPÄISCHER RECHERCHENBERICHT

Nummer der Anmeldung
EP 78 101 035.0

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | | | C 08 G 63/62<br>C 08 J 7/10<br>C 08 L 69/00 |
| A | DE - A - 2 401 630 (IDEMITSU)<br>* Anspruch 1; Beispiel 7; Seite 6, Absatz 1 *<br>-- | 1,3,4 | |
| A | DE - C - 1 099 732 (BAYER)<br>* Anspruch 1 *<br>-- | 1,3,4 | |
| A | US - A - 3 453 237 (EASTMAN KODAK)<br>* Ansprüche 1 und 2; Spalte 2, Zeilen 14 bis 21; Spalte 6, Zeilen 30 bis 33 *<br>-- | 1,3,4 | RECHERCHIERTE SACHGEBIETE (Int. Cl.²)<br>C 08 G 63/62<br>C 08 G 63/76<br>C 08 J 3/24<br>C 08 J 7/00<br>C 08 L 69/00 |
| D | DE - A - 1 930 257 (BAYER)<br>* Seite 2, Absatz 1 *<br>---- | 4 | |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

BAD ORIGINAL

X Der vorliegende Recherchenbericht wurde für alle Patentansprüche erstellt.

| Recherchenort | Abschlußdatum der Recherche | Prüfer |
|---|---|---|
| Berlin | 23-01-1979 | MARX |